# EUROPEAN PATENT SPECIFICATION

(11) **EP 3 327 420 B1**
(45) Date of publication and mention of the grant of the patent: **24.04.2019**
(21) Application number: 16200962.5
(22) Date of filing: 28.11.2016
(51) Int. Cl.: G01M 99/00, B61K 7/02

(54) **METHOD AND DEVICE FOR TESTING A HELIX RETARDER**
VERFAHREN UND VORRICHTUNG ZUM TESTEN EINES HELIX-RETARDERS
PROCÉDÉ ET DISPOSITIF DE TEST D'UN RETARDATEUR D'HÉLICE

(43) Date of publication of application: 30.05.2018
(73) Proprietor: Railcore AB, 266 98 Hjärnarp (SE)
(72) Inventor: Puronranta, Ensio, 266 98 HJÄRNARP (SE); Svensson, Mikael, 218 45 VINTRIE (SE)
(74) Representative: Hansson Thyresson AB

(56) References cited:
- CN-A- 102 944 396
- CN-A- 103 707 893
- CN-Y- 200 979 490
- US-B1- 6 216 525

## Description

### TECHNICAL FIELD

The invention relates to a method and a device for testing a helix retarder device for railway vehicles. Railroad car retarders are used in railroad classification yards. In the classification yard the cars are cut (separated) from trains. To prevent damage, retarders are placed along the traffic rails to slow free-wheeling cars to a safe speed.

### PRIOR ART

In a prior art retarder system for railway wagons, a retarder device which includes a rotatable cylinder resiliently urged into a working position adjacent a rail and provided with a flange with a helical contact surface. The flange of a railway wagon wheel which passes in a working or first direction influences the contact surface of the cylinder to set the cylinder rotating thereby pumping a hydraulic medium through a throttled opening to obtain a braking action. The cylinder is provided with an elongated projection arranged parallel to the axis of the cylinder, which extends radially from the cylinder and is directed, in a position of readiness of the cylinder, substantially towards the rail. These retarder devices are referred to as helix retards.

A helix retarder is set to apply a braking action at a predetermined moment if the speed of a railway wagon passing by exceeds a predetermined speed value. Normally, different helix retarders along a railway track in a yard are set at different speed values, so as to slow down a wagon in several steps. The predetermined speed value of a helix retarder is referred to as the nominal speed. The functionality and properties of the helix retarders should be continuously tested and monitored. A prior art method for testing helix retarders involves running over the retarder with a train having a measuring device. This prior art method will provide information about the retarder in rough outline only.

CN200979490 discloses a small size retarder comprising a sector cartwheel which has same feature size and structure with standard train cartwheel. Motivated by a high-speed cylinder power system which can adjust speed accurately, the cartwheel rolls the retarder at different speed thereby accurately simulating the process that the train cartwheel rolls over the retarder at different speed.

CN103707893 discloses an on-site performance detection vehicle for a railway retarder. A detection vehicle plate of the on-site performance detection vehicle is arranged above two rails; a front detection vehicle wheel axle and a rear detection vehicle wheel axle are arranged between the lower surface of the detection vehicle plate and the two rails side by side in a parallel manner.

CN102944396 discloses a mobile retarder condition inspection vehicle, which comprises a frame, a running mechanism, a retarder condition inspection mechanism, an intelligent control system and a power supply unit. The running mechanism, the retarder condition inspection mechanism, the intelligent control system and the power supply unit are arranged on the frame, wherein the retarder condition inspection mechanism comprises a transmission mechanism shell, a power mechanism, a pressure head and a rail gripping device.

US6216525 discloses a testing device for checking the resistive force of a retarder installed on the rail of a railway track for reducing the speed of a railcar rolling along the track. The retarder is a hydraulic unit including a housing, a cylinder slidably mounted in the housing, a piston rod fixed to the housing, a piston assembly fixed to the piston rod and dividing the cylinder into upper and lower chambers, and a valve arrangement responsive to the flow of hydraulic fluid flowing between the upper and lower chambers.

### SUMMARY OF THE INVENTION

There is a desire to obtain more detailed information about the functionality and properties of helix retarders. In accordance with the invention a body element is moved over the rotatable cylinder of the helix retarder in a fashion corresponding to the movement of a wheel of a wagon. The movement of the body element will cause a rotating movement of the rotatable cylinder. The speed of movement of the body element is varied between a value lower than the nominal speed value and a value higher than the nominal speed value. The brake force applied by the helix retarder during the process of varying the speed is measured or determined. After completion of the process relevant properties of the helix retarder are collected and can be presented in an appropriate way.

The body element can be formed like a wheel, similar to a normal wagon wheel, like a piston that can be pushed out through the helix retarder and then pulled back. In various embodiments, the body element includes a large wheel or a tractor tyre that is arranged to engage the helix retarder. By applying a force on the wheel sections of the tyre forming the body element will force the helix retarder to rotate. In a similar embodiment, a set of individually suspended and axially displaced wheels are forced to engage the helix retarder from above.

In various embodiments, the movement of the body element is repeated a plurality of times, so as to obtain a more reliable result. Also, by varying the speed of movement of the body element as set out above it is possible to obtain more exhaustive data and provide better information about the present status of the helix retarder.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic side view of an embodiment of principle of a testing device in accordance with the invention,
- Fig. 2: is a top view of a basic type of helix retarder,
- Fig. 3: is a schematic front view of selected components of the testing device shown in Fig. 1,
- Fig. 4: is a schematic side view of a basic embodiment of a testing device in accordance with the invention,
- Fig. 5: is a schematic top view of the testing device of Fig. 4,
- Fig. 6: is a schematic side view of an alternative embodiment of a testing device in accordance with the invention,
- Fig. 7: is a schematic side view of a further alternative embodiment of a testing device in accordance with the invention,
- Fig. 8: is a schematic side view of a still further alternative embodiment of a testing device in accordance with the invention, and
- Fig. 9: is a schematic side view of a still another alternative embodiment of a testing device in accordance with the invention.

### DETAILED DESCRIPTION

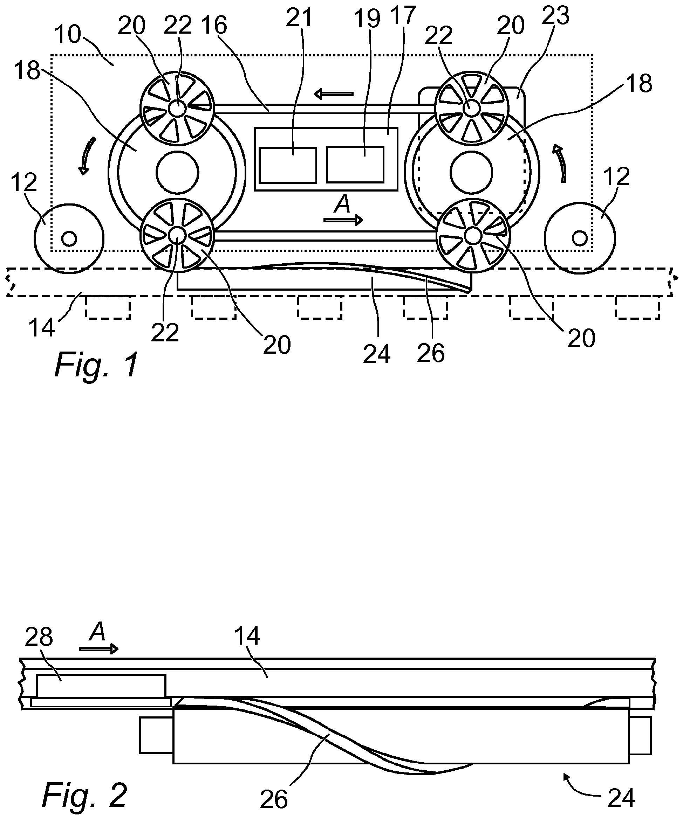

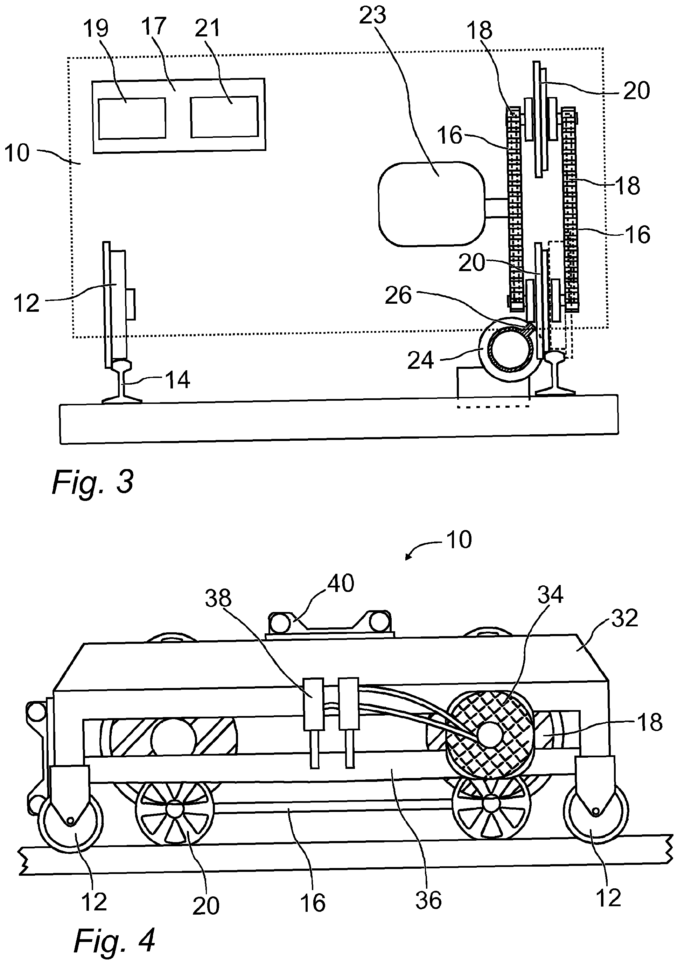

Fig. 1 and Fig. 3 show a principle of the present invention. A testing device 10 is supported by support wheels 12 on a conventional rail 14 in a railway track in a yard. The support wheels 12 are inverted, that is they run externally on the conventional rail 14 as indicated in Fig. 3, so as not to affect the helix retarder. Two chains 16 running in parallel are supported and driven by two sets of chain wheels 18, c.f. Fig. 3. The chain wheels 18 are driven by a propulsion device 23. Four railway wheels 20 are arranged spaced apart on shafts 22 extending between the chains 16. In various embodiments, the railway wheels are evenly distributed along the length of the chains 16, and the distance between the railway wheels is at least to the length of the cylinder of the helix retarder 24. In various embodiments, fewer or only one railway wheel 20 is provided on the chains 16. The railway wheels 20 as shown in Fig. 1, Fig. 3 and Fig. 4 have cut out portions, so as to lower the weight.

The testing device 10 is placed and maintained in a fixed position above a conventional helix retarder 24, c.f. Fig. 2. The helix retarder 24 mainly comprises a cylinder 25 with a flange 26 with a helical contact surface. When the flange of a conventional wagon wheel 28 passes in a working or first direction as indicated by arrow A it influences the contact surface of the cylinder 25 to set the cylinder rotating. The helix retarder is adjusted to apply a braking force when a predetermined speed of a passing railway vehicle is exceeded.

This movement is imitated by each one of the railway wheels 20 as the chain wheels 18 rotate and move the chains 16. The operation of the testing device 10 is controlled by a central unit 17, comprising a processing unit 19 and memory means 21. Each railway wheel 20 will act as a body element that engages the helical contact surface of the flange 26 and causes the cylinder 25 to rotate during movement of the railway wheel 20 in the working direction A. In a process of changing speed of rotation of the chain wheels 18 the speed of said railway wheels can be increased from a first speed level corresponding to a speed lower than said predetermined speed to a second speed level at least corresponding to said predetermined speed. It then will be possible to determine the brake force applied by said helix retarder to said railway wheel during the process of increasing the speed of the body element.

Preferably, the process of changing speed also comprises lowering the speed to said first speed or to zero, so as to obtain comprehensive information about functionality and properties of the helix retarder. In various embodiments the process of changing speed is then repeated at least twice. As a result, it will be possible to calculate a mean value of the obtained brake force values.

Fig. 3 shows that the testing device 10 is supported by two support wheels 12 on conventional rails 14. In the embodiment shown only one side of the testing device 10 is provided with chain wheels 18, chains 16 and railway wheels 20. In various embodiments both sides of the testing device 10 are equally equipped for testing helix retarders on both rails 14 at the same time. The flange 26 of the helix retarder 24 will engage a side surface of the railway wheel 20. The helix retarder 24 is provided with a support 30 maintaining it in position by the rail.

The basic embodiment of a testing device 10 shown in Fig. 4 comprises a chassis 32 supporting a gear box 34 which is connected to the chain wheels 18. The gearbox 34 together with the chain wheels 18 operate as the propulsion device 23. In the embodiment shown in Fig. 4 the gear box 34 is powered by an external power source, such as a hydraulic assembly (now shown) of a shovelling machine or a separate engine (not shown). When a shovelling machine is used, it can also be used for moving the testing device and for preventing it from any vertical displacement during a measuring process. In such a case shovel brackets 40 on the testing device can be used. Hydraulic power can also be used to adjust the position of an adjustable section 36 of the testing device by means of hydraulic cylinders 38. The adjustable section 36 supports gear box 34, chain wheels 18, chains 16 and railway wheels 20.

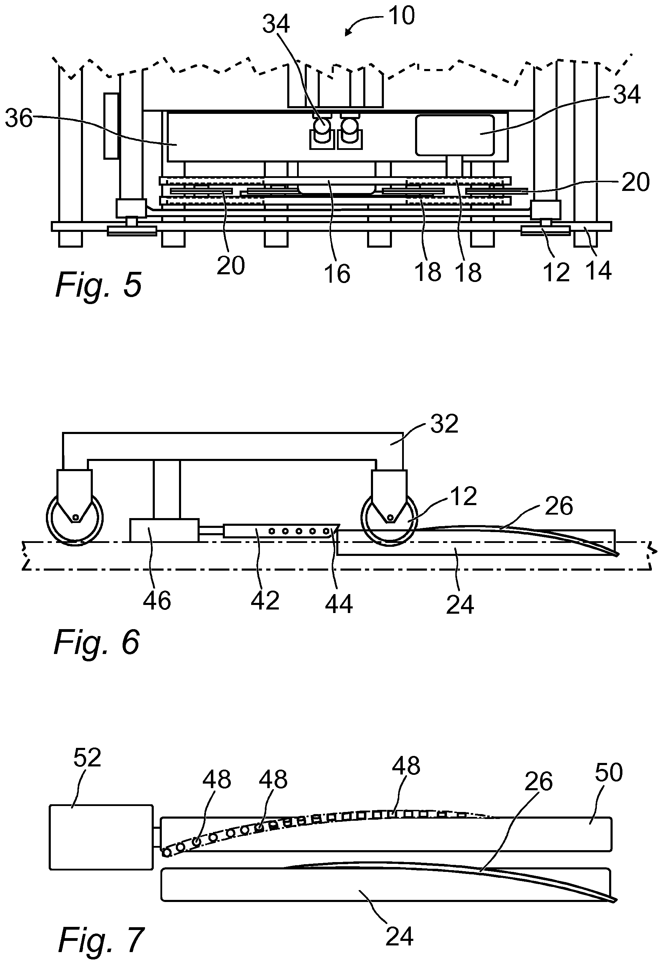

Fig. 5 shows schematically the arrangement with the testing device 10 with support wheels 12 on rails 14. The gear box 34 is operatively connected to one set of chain wheels 18. The chains 16 supports four railway wheels 20. The adjustable section 36 supports gear box 34, chain wheels 18, chains 16 and railway wheels 20.

An alternative embodiment of a testing device in accordance with the invention shown in Fig. 6 comprises a body element formed as a piston 42 with a front section 44. The front section 44 is formed to interact with the flange 26 of the helix retarder 24. The piston 42 is arranged to have a reciprocating movement from a pressure cylinder 46. The chassis 32 is supported by support wheels 12 and supports the pressure cylinder 46.

A further alternative embodiment of a testing device in accordance with the invention as shown in Fig. 7 basically comprises a body element formed as a plurality of rollers 48. The rollers 48 are arranged on an elongated cylinder 50 that is driven by a motor 52 for rotation around an axis extending through the elongated cylinder 50. The rollers 48 are distributed on the cylinder 50 to extend along a line with a helical form similar to the flange 26. By activating the motor 52 the elongated cylinder 50 will rotate and the rollers 48 will engage the flange 26 and force the helix retarder 24 to rotate. The speed of rotation of the cylinder is varied in accordance with the description above.

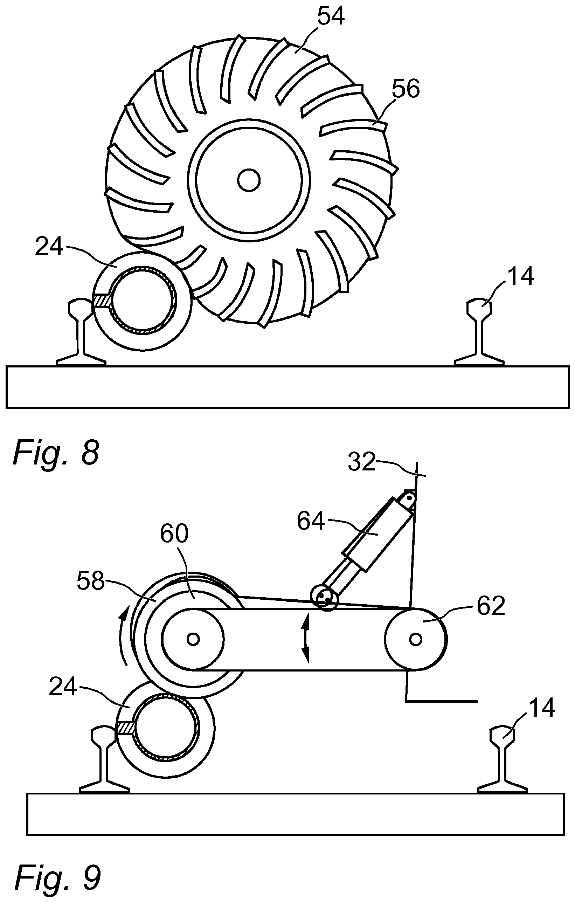

A still further alternative embodiment of a testing device in accordance with the invention as shown in Fig. 8 basically comprises a body element formed as a large tractor wheel 54. The tyre of the wheel 54 comprises a plurality of ridges 56 extending over the surface of the tyre. The tractor wheel 54 is arranged perpendicular to the helix retarder 24 and to full engagement as indicated in Fig. 8. By activating a motor (not shown) the tractor wheel will rotate and by engagement of the flange 26 it will force the helix retarder 24 to rotate. The speed of rotation of the tractor wheel is varied in accordance with the description above.

An even further alternative embodiment of a testing device in accordance with the invention as shown in Fig. 9 basically comprises a body element formed as a set of axially displaced and individually suspended wheels 58. The set of individually suspended wheels 58 is arranged on a pivotable support 60. The pivotable support 60 can be rotated from a first position where the set of axially displaced and individually suspended wheels 58 does not engage the helix retarder 24 to a position where it engages the helix retarder 24 along an axially extending part. The set of wheels 58 is driven by transmission belts, chains or similar means connected to a transmission motor 62. The transmission motor 62 and a pivoting device 64 are arranged on the chassis 32. By activating the transmission motor 62 the set of wheels 58 will rotate and by engagement of the flange 26 it will force the helix retarder 24 to rotate. The speed of rotation of the tractor wheel is varied in accordance with the description above.

## Claims

1. A method for testing a helix retarder (24) for railway vehicles with a testing device (10), said helix retarder (24) comprising an elongated rotatable cylinder (25) arranged adjacent a rail (14), being provided with a flange (26) having a helical contact surface and being adjusted to apply a braking force when a predetermined speed of a passing railway vehicle is exceeded, ***characterised* by**
engaging a section of a body element (20; 42; 48, 54; 58) of said testing device (10) with said helical contact surface,
moving said body element (20; 42; 48, 54; 58), so as to cause a rotating movement of said elongated rotatable cylinder (25),
increasing the speed of said body element from a first speed level corresponding to a speed lower than said predetermined speed to a second speed level at least corresponding to said predetermined speed, and
determining the brake force applied by said helix retarder (24) to said body element (20; 42; 48, 54; 58) during the process of increasing the speed of the body element (20; 42; 48, 54; 58).

2. A method as claimed in claim 1, comprising decreasing the speed of said body element from said second speed level to said first speed level.

3. A method as claimed in claim 2, comprising repeating speed increasing and speed decreasing steps at least twice, and determining the brake force applied by said helix retarder (24) to said body element (20; 42; 48, 54; 58) as a mean value of force values obtained during the process of increasing the speed of the body element (20; 42; 48, 54; 58)

4. A method as claimed in claim 1, comprising applying a vertical force to the body element (20; 42; 48, 54; 58) exceeding any forces in opposite directions arising during movement of said body element (20; 42; 48, 54; 58).

5. A testing device (10) for testing a helix retarder (24) for railway vehicles, said helix retarder (24) comprising an elongated rotatable cylinder (25) arranged adjacent a rail (14), being provided with a flange (26) having a helical contact surface and being adjusted to apply a braking force when a predetermined speed of a passing railway vehicle is exceeded, ***characterised* by**,
a movable body element (20; 42; 48, 54; 58) having a section adapted for engaging of with said helical contact surface of said flange (26),
a propulsion device (23; 34; 46; 52; 62) arranged to move said body element (20; 42; 48, 54; 58) to cause a rotating movement of said elongated rotatable cylinder (25), wherein said propulsion device (23; 34; 46; 52; 62) is arranged to increase the speed of said body element (20; 42; 48, 54; 58) from a first speed level corresponding to a speed lower than said predetermined speed to a second speed level at least corresponding to said predetermined speed, and
a central unit (17) arranged to determine the brake force applied by said helix retarder (24) to said body element (20; 42; 48, 54; 58) during the process of increasing the speed of the body element (20; 42; 48, 54; 58).

6. A testing device (10) as claimed in claim 5, comprising four support wheels (12) arranged to run externally on rails (14).

7. A testing device (10) as claimed in claim 5 or 6, wherein
the movable body element (20; 42; 48, 54; 58) comprises at least one railway wheel (20) supported by and between two chains (16) driven by two double chain wheels (18).

8. A testing device (10) as claimed in claim 5, wherein
the movable body element (20; 42; 48, 54; 58) comprises four space apart railway wheels (20) supported by and between two chains (16) driven by two double chain wheels (18), wherein the distance between the railway wheels (20) is equal to or greater than the length of the rotatable cylinder (25).

9. A testing device (10) as claimed in any of the preceding claims, wherein shovel brackets (40) are arranged on an upper side.

10. A testing device (10) as claimed in claim 5, wherein
the movable body element (20; 42; 48, 54; 58) comprises a plurality of rollers (48) attached to an elongated cylinder (50), wherein the plurality of rollers (48) are distributed along a helical line on said elongated cylinder (50).

## Patentansprüche

1. Verfahren zum Testen eines Helix-Retarders (24) für Schienenfahrzeuge mit einer Testvorrichtung (10), wobei der Helix-Retarder (24) einen länglichen drehbaren Zylinder (25) umfasst, der benachbart zu einer Schiene (14) angeordnet ist, mit einem Flansch (26) bereitgestellt ist, der eine spiralförmige Kontaktfläche aufweist und dazu angepasst ist, eine Bremskraft aufzubringen, wenn eine vorbestimmte Geschwindigkeit eines vorbeifahrenden Schienenfahrzeugs überschritten wird; ***gekennzeichnet* durch**
Eingreifen eines Bereichs eines Körperelements (20; 42; 48, 54; 58) der Testvorrichtung (10) mit der spiralförmigen Kontaktfläche,
Bewegen des Körperelements (20; 42; 48, 54; 58), um eine Drehbewegung des länglichen drehbaren Zylinders (25) auszulösen,
Erhöhen der Geschwindigkeit des Körperelements von einem ersten Geschwindigkeitsniveau, das einer Geschwindigkeit entspricht, die geringer ist als die vorbestimmte Geschwindigkeit, auf ein zweites Geschwindigkeitsniveau, das mindestens der vorbestimmten Geschwindigkeit entspricht, und
Bestimmen der Bremskraft, die **durch** den Helix-Retarder (24) während des Prozesses des Erhöhens der Geschwindigkeit des Körperelements (20; 42; 48, 54; 58) auf das Körperelement (20; 42; 48, 54; 58) aufgebracht wird.

2. Verfahren nach Anspruch 1, umfassend ein Verringern der Geschwindigkeit des Körperelements von dem zweiten Geschwindigkeitsniveau auf das erste Geschwindigkeitsniveau.

3. Verfahren nach Anspruch 2, umfassend ein mindestens zweimaliges Wiederholen der Schritte der Geschwindigkeitserhöhung und der Geschwindigkeitsverringerung und ein Bestimmen der Bremskraft, die durch den Helix-Retarder (24) auf das Körperelement (20; 42; 48, 54; 58) aufgebracht wird, als einen Mittelwert von Kraftwerten, die während des Prozesses des Erhöhens der Geschwindigkeit des Körperelements (20; 42; 48, 54; 58) erhalten werden.

4. Verfahren nach Anspruch 1, umfassend ein Aufbringen einer vertikalen Kraft auf das Körperelement (20; 42; 48, 54; 58), die jegliche Kräfte in entgegengesetzte Richtungen übersteigt, die während einer Bewegung des Körperelements (20; 42; 48, 54; 58) entstehen.

5. Testvorrichtung (10) zum Testen eines Helix-Retarders (24) für Schienenfahrzeuge, wobei der Helix-Retarder (24) einen länglichen drehbaren Zylinder (25) umfasst, der benachbart zu einer Schiene (14) angeordnet ist, mit einem Flansch (26) bereitgestellt ist, der eine spiralförmige Kontaktfläche aufweist und dazu angepasst ist, eine Bremskraft aufzubringen, wenn eine vorbestimmte Geschwindigkeit eines vorbeifahrenden Schienenfahrzeugs überschritten wird, ***gekennzeichnet* durch**
ein bewegliches Körperelement (20; 42; 48, 54; 58), das einen Bereich aufweist, der für einen Eingriff mit der spiralförmigen Kontaktfläche des Flansches (26) angepasst ist,
eine Vortriebsvorrichtung (23; 34; 46; 52; 62), die dazu angeordnet ist, das Körperelement (20; 42; 48, 54; 58) zu bewegen, um eine Drehbewegung des länglichen drehbaren Zylinders (25) auszulösen, wobei die Vortriebsvorrichtung (23; 34; 46; 52; 62) dazu angeordnet ist, die Geschwindigkeit des Körperelements (20; 42; 48, 54; 58) von einem ersten Geschwindigkeitsniveau, das einer Geschwindigkeit entspricht, die geringer ist als die vorbestimmte Geschwindigkeit, auf ein zweites Geschwindigkeitsniveau, das mindestens der vorbestimmten Geschwindigkeit entspricht, zu erhöhen, und
eine Zentraleinheit (17), die dazu angeordnet ist, die Bremskraft zu bestimmen, die während des Prozesses des Erhöhens der Geschwindigkeit des Körperelements (20; 42; 48, 54; 58) **durch** den Helix-Retarder (24) auf das Körperelement (20; 42; 48, 54; 58) aufgebracht wird.

6. Testvorrichtung (10) nach Anspruch 5, umfassend vier Stützräder (12), die dazu angeordnet sind, extern auf Schienen (14) zu laufen.

7. Testvorrichtung (10) nach Anspruch 5 oder 6, wobei
das bewegliche Körperelement (20; 42; 48, 54; 58) mindestens ein Schienenrad (20) umfasst, das von und zwischen zwei Ketten (16) gestützt wird, die von zwei Doppelkettenrädern (18) angetrieben werden.

8. Testvorrichtung (10) nach Anspruch 5, wobei
das bewegliche Körperelement (20; 42; 48, 54; 58) vier voneinander beabstandete Schienenräder (20) umfasst, die von und zwischen zwei Ketten (16) gestützt werden, die von zwei Doppelkettenrädern (18) angetrieben werden, wobei der Abstand zwischen den Schienenrädern (20) gleich der Länge des drehbaren Zylinders (25) oder größer ist.

9. Testvorrichtung (10) nach einem der vorhergehenden Ansprüche, wobei Schaufelhalterungen (40) auf einer Oberseite angeordnet sind.

10. Testvorrichtung (10) nach Anspruch 5, wobei
das bewegliche Körperelement (20; 42; 48, 54; 58) eine Vielzahl von Rollen (48) umfasst, die an einem länglichen Zylinder (50) angebracht sind, wobei die Vielzahl von Rollen (48) entlang einer spiralförmigen Linie auf dem länglichen Zylinder (50) verteilt sind.

## Revendications

1. Procédé de test d'un retardateur à hélice (24) pour des véhicules ferroviaires comprenant un dispositif de test (10), ledit retardateur à hélice (24) comprenant un cylindre rotatif allongé (25) disposé en position adjacente à un rail (14), pourvu d'une bride (26) ayant une surface de contact hélicoïdale et étant ajusté de manière à appliquer une force de freinage lorsque la vitesse prédéterminée d'un véhicule ferroviaire passant est dépassée,
**caractérisé par** les étapes consistant à :
engager une section d'un élément de corps (20 ; 42 ; 48, 54 ; 58) dudit dispositif de test (10) avec ladite surface de contact hélicoïdale,
déplacer ledit élément de corps (20 ; 42 ; 48, 54 ; 58), de manière à provoquer un mouvement de rotation dudit cylindre rotatif allongé (25), augmenter la vitesse dudit élément de corps d'un premier niveau de vitesse correspondant à une vitesse inférieure à ladite vitesse prédéterminée à un deuxième niveau de vitesse correspondant au moins à ladite vitesse prédéterminée, et déterminer la force de freinage appliquée par ledit retardateur à hélice (24) audit élément de corps (22 ; 42 ; 48, 54 ; 58) au cours du processus d'augmentation de la vitesse de l'élément de corps (20 ; 42 ; 48, 54 ; 58).

2. Procédé selon la revendication 1, comprenant l'étape consistant à diminuer la vitesse dudit élément de corps dudit deuxième niveau de vitesse audit premier niveau de vitesse.

3. Procédé selon la revendication 2, comprenant l'étape consistant à répéter les étapes d'augmentation et de diminution de la vitesse au moins deux fois, et à déterminer la force de freinage appliquée par ledit retardateur à hélice (24) audit élément de corps (20 ; 42 ; 48, 54 ; 58) en tant que valeur moyenne de valeurs de force obtenues au cours du processus d'augmentation de la vitesse de l'élément de corps (20 ; 42 ; 48, 54 ; 58).

4. Procédé selon la revendication 1, comprenant l'étape consistant à appliquer à l'élément de corps (20 ; 42 ; 48, 54 ; 58) une force verticale dépassant toutes les forces dans des directions opposées survenant au cours du mouvement dudit élément de corps (20 ; 42 ; 48, 54 ; 58).

5. Dispositif de test (10) pour tester un retardateur à hélice (24) pour des véhicules ferroviaires, ledit retardateur à hélice (24) comprenant un cylindre rotatif allongé (25) disposé en position adjacente à un rail (14), pourvu d'une bride (26) ayant une surface de contact hélicoïdale et étant ajusté de manière à appliquer une force de freinage lorsque la vitesse prédéterminée d'un véhicule ferroviaire passant est dépassée, **caractérisé par**
un élément de corps déplaçable (20 ; 42 ; 48, 54 ; 58) ayant une section prévue pour s'engager avec ladite surface de contact hélicoïdale de ladite bride (26),
un dispositif de propulsion (23 ; 34 ; 46 ; 52 ; 62) prévu pour déplacer ledit élément de corps (20 ; 42 ; 48, 54 ; 58) de manière à causer un mouvement de rotation dudit cylindre rotatif allongé (25), ledit dispositif de propulsion (23 ; 34 ; 46 ; 52 ; 62) étant prévu pour augmenter la vitesse dudit élément de corps (20 ; 42 ; 48, 54 ; 58) d'un premier niveau de vitesse correspondant à une vitesse inférieure à ladite vitesse prédéterminée à un deuxième niveau de vitesse correspondant au moins à ladite vitesse prédéterminée, et
une unité centrale (17) prévue pour déterminer la force de freinage appliquée par ledit retardateur à hélice (24) audit élément de corps (20 ; 42 ; 48, 54 ; 58) au cours du processus d'augmentation de la vitesse de l'élément de corps (20 ; 42 ; 48, 54 ; 58).

6. Dispositif de test (10) selon la revendication 5, comprenant quatre roues de support (12) prévues pour rouler à l'extérieur sur des rails (14).

7. Dispositif de test (10) selon la revendication 5 ou 6, dans lequel
l'élément de corps déplaçable (20 ; 42 ; 48, 54 ; 58) comprend au moins une roue ferroviaire (20) supportée par et entre deux chaînes (16) entraînées par deux roues à chaîne double (18).

8. Dispositif de test (10) selon la revendication 5, dans lequel
l'élément de corps déplaçable (20 ; 42 ; 48, 54 ; 58) comprend quatre roues ferroviaires espacées (20) supportées par et entre deux chaînes (16) entraînées par deux roues à chaîne double (18), la distance entre les roues ferroviaires (20) étant supérieure ou égale à la longueur du cylindre rotatif (25).

9. Dispositif de test (10) selon l'une quelconque des revendications précédentes, dans lequel des supports de pelle (40) sont disposés sur un côté supérieur.

10. Dispositif de test (10) selon la revendication 5, dans lequel
l'élément de corps déplaçable (20 ; 42 ; 48, 54 ; 58) comprend une pluralité de rouleaux (48) attachés à un cylindre allongé (50), la pluralité de rouleaux (48) étant répartis le long d'une ligne hélicoïdale sur ledit cylindre allongé (50).
